# EUROPÄISCHE PATENTSCHRIFT

(11) **EP 1 288 515 B1**
(45) Veröffentlichungstag und Bekanntmachung des Hinweises auf die Patenterteilung: **30.06.2004**
(21) Anmeldenummer: 02017042.9
(22) Anmeldetag: 27.07.2002
(51) Int. Cl.: F16D 3/38, F16D 3/06, F16D 3/02

(54) **Gelenkwellenkupplung**
Cardan shaft coupling
Arbre à cardan

(30) Priorität: 30.08.2001 US 943685
(43) Veröffentlichungstag der Anmeldung: 05.03.2003
(73) Patentinhaber: GKN Walterscheid GmbH, 53797 Lohmar (DE)
(72) Erfinder: Loughrin, Terry, Bolingbrook, Illinois 60440 (US); Zubik, John, Lockport, Illinois 60441 (US); Schott, Wilhelm, Dipl.-Ing., 50996 Köln (DE)
(74) Vertreter: Harwardt, Günther, Dipl.-Ing.

(56) Entgegenhaltungen:
- DE-A- 4 445 634
- US-A- 3 845 832
- US-A- 4 622 840
- US-A- 5 681 222

## Beschreibung

Die Erfindung betrifft eine Gelenkwellenanordnung zur Verbindung eines antreibenden Teils mit einem angetriebenen Teil,
- mit einer teleskopischen Wellenanordnung, die
   - die eine erste Welle und
   - eine zweite Welle aufweist, welche mit der ersten Welle entlang einer Längsachse axial gleitend verschiebbar und drehfest für eine Drehmomentübertragung zwischen beiden verbunden ist,
- mit einem ersten Kreuzgelenk, das
   - eine erste Kreuzgelenkgabel,
   - eine zweite Kreuzgelenkgabel und
   - ein erstes Gelenkkreuz, durch das die erste Kreuzgelenkgabel und die zweite Kreuzgelenkgabel miteinander verbunden sind, umfasst,
- mit einem zweiten Kreuzgelenk, das
   - eine dritte Kreuzgelenkgabel,
   - eine vierte Kreuzgelenkgabel und
   - ein zweites Gelenkkreuz, durch das die dritte Kreuzgelenkgabel und die vierte Kreuzgelenkgabel miteinander verbunden sind, umfasst,
- mit Drehverstellmitteln, die
   - auf einen vorgegebenen Drehwinkel begrenzt, eine freie Relativdrehbewegung einer der Kreuzgelenkgabeln eines der Kreuzgelenke einerseits zu einem der beiden Wellenteile oder einem Bauteil, der zu einem angetriebenen oder treibenden Teil gehört, andererseits,
zulassen.

In vielen landwirtschaftlichen Anwendungsbereichen wird ein Traktor verwendet, um ein landwirtschaftliches Gerät nicht nur zu ziehen, sondern auch anzutreiben. Um dieses Ziel zu erreichen, weist der Traktor eine Ausgangswelle (d.h. ein antreibendes Teil) auf, das antriebsmäßig mit einer Eingangswelle (d. h. mit einem angetriebenen Teil) des landwirtschaftlichen Geräts mittels einer Gelenkwelle verbunden werden muss. Das Kuppeln der Gelenkwelle, die in der Regel mit der Eingangswelle des Geräts verbunden ist, mit der Ausgangswelle des Traktors ist schwierig.

Oft sind die Ausgangswelle des Traktors und die Eingangswelle des landwirtschaftlichen Geräts nicht ausreichend relativ zueinander ausgerichtet und verhindern daher eine schnelle Verbindung. Es ist daher wünschenswert, eine Gelenkwellenanordnung zu schaffen, die einen Bereich "freier Drehbewegung" aufweist, der eine Verbindung zwischen der Eingangswelle und der Ausgangswelle ermöglicht, wenn diese nicht drehstellungsmäßig genau zueinander ausgerichtet sind.

In der DE 44 45 634 A ist eine Gelenkwellenanordnung beschrieben, die zur Verbindung eines antreibenden Teils mit einem angetriebenen Teil dient. Sie umfasst eine teleskopische Wellenanordnung mit einer ersten Welle und einer zweiten Welle, welche mit der ersten Welle entlang der Längsachse axial gleitend verschiebbar und drehfest für eine Drehmomentübertragung zwischen beiden verbunden ist.

Die Gelenkwellenanordnung umfasst ein erstes Kreuzgelenk mit einer ersten Kreuzgelenkgabel und einer zweiten Kreuzgelenkgabel sowie einem ersten Gelenkkreuz, das die erste Kreuzgelenkgabel mit der zweiten Kreuzgelenkgabel verbindet. Sie umfasst ferner ein zweites Kreuzgelenk, das eine dritte Kreuzgelenkgabel und eine vierte Kreuzgelenkgabel sowie ein zweites Gelenkkreuz aufweist, welches die dritte Kreuzgelenkgabel mit der vierten Kreuzgelenkgabel verbindet. Eine der beiden Kreuzgelenkgabeln des ersten Kreuzgelenkes ist mit der ersten Welle und eine der beiden Kreuzgelenkgabeln des zweiten Kreuzgelenkes ist mit der zweiten Welle der teleskopischen Wellenanordnung verbunden. An die mit dem anzutreibenden Teil bzw. Gerät zu verbindende Kreuzgelenkgabel ist ein in zwei Drehrichtungen sperrender Freilauf angeschlossen, wobei die Einschaltpositionen in den beiden Drehrichtungen zueinander versetzt sind, so dass zwischen diesen beiden Positionen ein freier Drehbewegungsbereich ermöglicht wird. Eine solche Kupplung freier Drehbewegungsbereich ermöglicht wird. Eine solche Kupplung kann jedoch nur in solchen Fällen eingesetzt werden, in denen keine zur Überlastung des Gerätes schützenden Kupplungen eingesetzt werden müssen, denn diese Kupplung ist an der Stelle angeordnet, an der üblicherweise die Funktion des Gerätes überwachende Kupplungen eingesetzt sind. Eine solche Lösung ist daher nur dort geeignet, wo auch der nötige Freiraum bereit gestellt werden kann.

Aus dem Stand der Technik ist ferner eine teleskopische Gelenkwellenanordnung bekannt, die einen Drehbereich mit "freier Bewegung" im Bereich der teleskopischen Verbindung aufweist. Eine solche Gelenkwellenanordnung ist in den US-Patenten Nr. 5 827 122 und 5 938 534 dargestellt. Diese Patente betreffen jeweils eine Gelenkwellenanordnung mit einer ersten und einer zweiten Gelenkwellenhälfte, die teleskopisch mit einander verbunden sind. Die teleskopische Verbindung ist weiterhin mit einer Zähne- und Nutenanordnung versehen, die einen Relativbewegungsbereich zwischen der ersten und zweiten Wellenhälfte und gleichzeitig eine relative Axialbewegung zwischen den beiden Wellenhälften ermöglicht.

Verbreitet ist eine teleskopische Wellenanordnung, bei der die erste und die zweite Welle jeweils einen zitronenförmigen Querschnitt aufweisen, der sich aus einem im wesentlichen kreisförmigen Abschnitt mit diametralen Rippen zusammensetzt. Die Rippen legen die erste und die zweite Welle für eine gemeinsame Drehbewegung fest, lassen jedoch gleichzeitig eine relative Axialverschiebung der beiden Weiten zu. Ein solcher Querschnitt, der im wesentlichen günstige Herstellungskosten und eine gute Zentrierung bewirkt, ist nicht geeignet um die Funktion einer "freien Bewegung" dazwischen vorzusehen.

Es ist daher Aufgabe der Erfindung, eine Gelenkwellenanordnung zu schaffen, bei der für eine freie Drehverstellung Drehverstellmittel bereit gestellt werden, die sich einfach in eine Gelenkwelle integrieren lassen, ohne den Bauraum zu vergrößern.

Diese Aufgabe wird erfindungsgemäß dadurch gelöst, dass die Drehverstellmittel eine Verzahnung mit axial verlaufenden Zähnen und Nuten als Elemente umfassen, von denen eines Bestandteil einer Kreuzgelenkgabel und eines Bestandteil eines Wellenteils oder des Bauteils ist und dass die Kreuzgelenkgabel zu dem Wellenteil oder dem Bauteil axial unbeweglich befestigt ist.

Auf diese Weise verteilt die Lösung gemäß der vorliegenden Erfindung die Verschiebefunktion und die Funktion der "freien Bewegung" auf gesonderte Teile der Gelenkwellenanordnung. Dabei ist es möglich, einen zitronenförmigen Querschnitt für die Wellen der teleskopischen Wellenanordnung zu verwenden, um eine Verschiebebewegung zu ermöglichen. Ein bedeutender Vorteil dieser Maßnahme besteht darin, dass diese aufgrund der Zentrierung der Rippen preiswerter hergestellt werden können. Weiterhin können durch die Trennung der Verschiebefunktion und der Funktion der _{"}freien Bewegung" alle Arten von bekannten Verschiebebauteilen verwendet werden. Außerdem hat die Funktion der "freien Bewegung" keine kinematische Wirkung auf die Verschiebefunktion.

Bevorzugte Ausgestaltungen der erfindungsgemäßen Lösung sind in den Unteransprüchen näher definiert.

Aus der nachfolgenden spezifischen Beschreibung verschiedener Ausführungsformen in Verbindung mit den Zeichnungen erschließen sich für den Fachmann weitere Aufgaben und Vorteile.

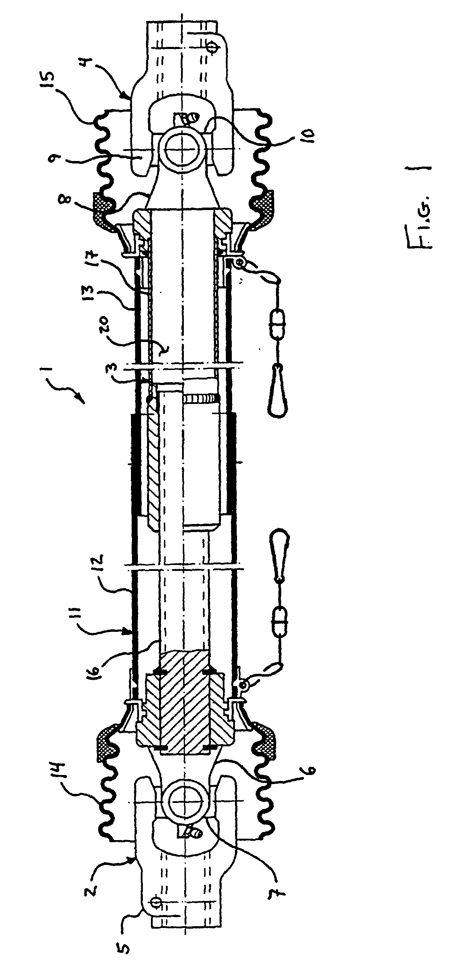

In den Zeichnungen zeigt
- Figur 1: eine teilweise Querschnittsansicht einer Gelenkwellenanordnung gemäß den Prinzipien der vorliegenden Erfindung,
- Figur 2: eine teilweise Querschnittsansicht eines Kreuzgelenkteils ist, das mit einer Welle der Gelenkwellenanordnung nach einer ersten bevorzugten Ausführungsform der vorliegenden Erfindung verbunden,
- Figur 3: eine Querschnittsansicht bezüglich der Wirkverbindung eines Drehgelenks mit einer Welle entlang der Linie A-A der Fig. 2,
- Figur 4: eine Querschnittsansicht eines Wellenanordnungsabschnitts entlang der Linie B-B der Fig. 2,
- Figur 5: eine teilweise Querschnittsansicht eines Kreuzgelenkteils ist, das mit einer Welle gemäß einer zweiten bevorzugten Ausführungsform der vorliegenden Erfindung verbunden,
- Figur 6: eine Querschnittsansicht bezüglich des Zusammenwirkens des Kreuzgelenks und der Welle entlang der Linie C-C der Figur 5,
- Figur 7: eine teilweise Querschnittsansicht eines Kreuzgelenkteils ist, das mit einer Welle eines extern angetriebenen oder treibenden Teils verbunden,
- Figur 8: eine Querschnittsansicht bezüglich des Zusammenwirkens des Kreuzgelenks und der Welle entlang der Linie D-D der Figur 7,
- Figur 9: eine teilweise Querschnittsansicht einer alternativen Ausführungsform eines Kreuzgelenks ist, das mit einem extern angetriebenen oder treibenden Teil verbunden,
- Figur 10: eine Querschnittsansicht des Eingriffs des Kreuzgelenks entlang der Linie E-E der Figur 9.

In den Figuren ist eine Gelenkwellenanordnung 1 dargestellt. Die Gelenkwellenanordnung 1 weist im wesentlichen eine erste Kreuzgelenkanordnung 2, eine teleskopische Wellenanordnung 3 und eine zweite Kreuzgelenkanordnung 4 auf. Die erste Kreuzgelenkanordnung 2 weist eine erste und eine zweite Kreuzgelenkgabel 5, 6 auf, die durch ein erstes Gelenkkreuz 7 antriebsmäßig miteinander verbunden sind. Analog weist die zweite Kreuzgelenkanordnung 4 eine dritte und vierte Kreuzgelenkgabel 8, 9 auf, die durch ein zweites Gelenkkreuz 10 antriebsmäßig miteinander verbunden sind. Im allgemeinen erlauben das erste und zweite Kreuzgelenk 2, 4 es der Gelenkwellenanordnung 1, abwinkelbar zu sein, damit ein antreibendes Teil (nicht dargestellt) mit einem angetriebenen Teil (nicht dargestellt) verbunden werden kann; diese beiden Teile müssen zueinander um einen bestimmten Grad relativ zueinander beweglich sein.

Weiterhin ist eine Schutzabdeckung 11 vorgesehen, die die Gelenkwellenanordnung 1 vollkommen umschließt. Die Schutzabdeckung 11 weist ein erstes und zweites Rohr 12, 13, die teleskopisch ineinander greifen, eine um das erste Kreuzgelenk 2 angeordnete erste flexible Abdeckung 14, und eine um das zweite Kreuzgelenk 4 angeordnete zweite flexible Abdeckung 15 auf. Die erste Abdeckung 14 kann entweder an dem antreibenden oder an dem angetriebenen Teil und die zweite flexible Abdeckung 15 an dem anderen der beiden Teile angebracht werden. Auf diese Weise ist die Schutzabdeckung 11 drehfest gegenüber dem angetriebenen und dem antreibenden Teil angeordnet und die Gelenkwellenanordnung 1 rotiert in dieser.

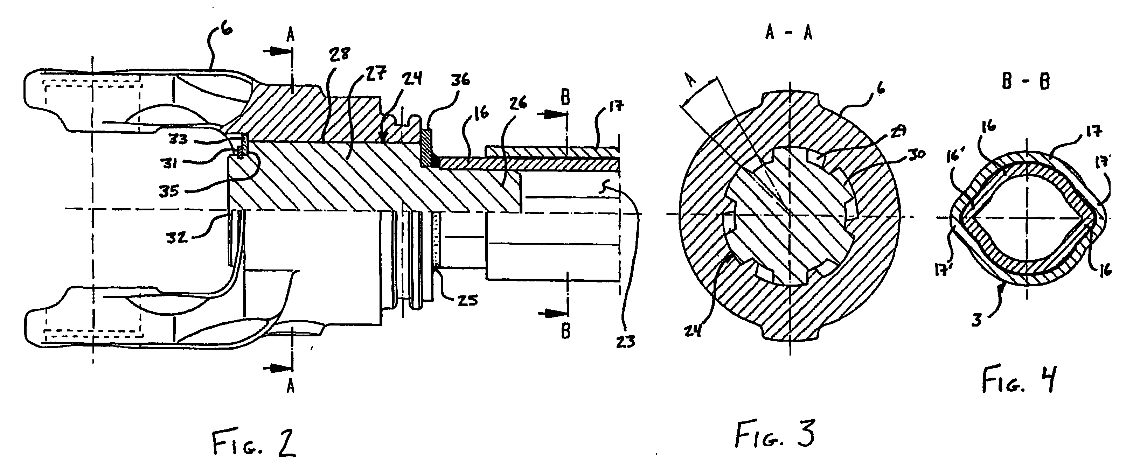

Die teleskopische Wellenanordnung 3 umfasst eine erste Welle 16, die in einer zweiten Welle 17 gleitend verschiebbar angeordnet ist. Die erste Welle 16 ist antriebsmäßig mit der zweiten Kreuzgelenkgabel 6 des ersten Kreuzgelenks 2 verbunden, wie dies in weiteren Einzelheiten unten beschrieben wird. Die zweite Welle 17 ist mit der dritten Kreuzgelenkgabel 8 des zweiten Kreuzgelenks 4 verbunden. Wie es am deutlichsten aus der Figur 4 hervorgeht, weisen die erste und zweite Welle 16, 17 jeweils einen kreisförmigen Querschnitt mit diametral gegenüberliegenden Ausformungsabschnitten oder Rippen 16', 17' auf. Die erste und zweite Welle 16, 17 greifen verschiebbar ineinander ein, wobei die erste Welle 16 in eine Bohrung 20 der zweiten Welle 17 eingreift und die Rippen 16' gleitend in die Rippen 17' eingreifen. Auf diese Weise sind die erste und zweite Welle 16, 17 drehfest miteinander verbunden, lassen jedoch eine relative Axialverschiebung entlang der Längsachse X zu. Ein derartiger, eine Verschiebeverbindung zulassender Querschnitt wird vorgezogen, da er zur Herstellung von ersten und zweiten Wellen 16, 17 weniger teuer ist als bekannte Ausführungen; auch ist eine verschiebbare Keilverzahnungsverbindung möglich.

Obgleich die vorliegende Erfindung eine Rippenverbindung zur Bereitstellung der teleskopischen Verbindung beschreibt, liegt es jedoch auch im Rahmen der Erfindung, wahlweise einen Keilverzahnungseingriff zwischen der ersten und zweiten Welle 16, 17 zur Bereitstellung dieser Funktion zu verwenden.

Unter besonderer Bezugnahme auf die Figuren 2 und 3 wird nun eine erste bevorzugte Ausführungsform der Verbindung zwischen der ersten Welle 16 und dem ersten Kreuzgelenk 2 beschrieben. Bei der ersten bevorzugten Ausführungsform ist die erste Welle 16 in Form eines Rohres mit einer Bohrung 23 vorgesehen. Ein Zapfen 24 verbindet die erste Welle 16 mit der zweiten Kreuzgelenkgabel 6, wobei eine Schweißnaht 25 vorgesehen ist, um den Zapfen 24 und die erste Welle 16 fest miteinander zu verbinden. Der Zapfen 24 weist ein in der Bohrung 23 der ersten Welle 16 angeordnetes erstes Ende 26 mit einem reduzierten Durchmesser sowie ein in der Bohrung 28 der zweiten Kreuzgelenkgabel 6 antriebsmäßig angeordnetes zweites Ende 28 mit einem größeren Durchmesser auf.

Die Bohrung 28 der zweiten Kreuzgelenkgabel 6 ist mit einer Anzahl von axial sich erstreckenden Nuten 29 versehen und das zweite Ende 27 des Zapfens 24 weist eine Anzahl von radial sich erstreckenden axialen Zähnen 30 auf. Das zweite Ende 27 des Zapfens 24 ist in der Bohrung 28 der zweiten Kreuzgelenkgabel 6 aufgenommen, wobei die Zähne 30 mit den jeweiligen Nuten 29 fluchten. Wie es am deutlichsten in der Figur 3 ersichtlich ist, weisen die Nuten 29 im wesentlichen eine größere Breite auf als die Zähne 30. infolgedessen ergibt sich ein Bereich mit einer Relativdrehbewegung oder die Möglichkeit einer "freien Bewegung" zwischen der zweiten Kreuzgelenkgabel 6 und dem Zapfen 24. Der Bereich der "freien Bewegung" wird durch den Winkel A dargestellt.

Obwohl die zweite Kreuzgelenkgabel 6 und der Zapfen 24 innerhalb des bereitgestellten Bereichs relativ zueinander drehbar sind, können sie keine Axialverschiebungsbewegung relativ zueinander ausführen. Dementsprechend sind ein erster Ring 31 um ein Ende 32 des Zapfens 24 und ein zweiter Ring 33 innerhalb einer Nut 34 des Zapfens 24 angeordnet, um den ersten Ring 31 in Kontakt mit einer Fläche 35 des Zapfens 24 zu halten. Auf diese Weise wird die zweite Kreuzgelenkgabel 6 fest zwischen dem ersten Ring 31 und einer um die erste Welle 16 herum angeordneten Scheibe 36 gehalten.

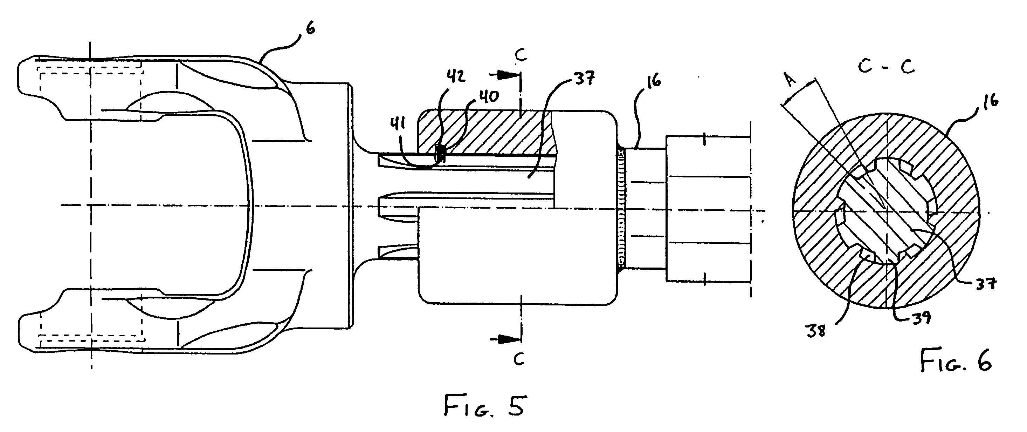

Unter besonderer Bezugnahme auf die Figuren 5 und 6 wird eine zweite bevorzugte Ausführungsform der Verbindung zwischen der ersten Welle 16 und dem ersten Kreuzgelenk 2 im einzelnen beschrieben. Bei der zweiten bevorzugten Ausführungsform weist die zweite Kreuzgelenkgabel 6 des ersten Kreuzgelenks 2 einen sich von diesem aus erstreckenden Zapfen 37 auf, der in der Bohrung 20 der ersten Welle 16 aufgenommen ist. Die Bohrung 20 der ersten Welle 16 weist eine Anzahl von axial verlaufenden Nuten 38 auf, und der Zapfen 37 der zweiten Kreuzgelenkgabel 6 weist eine Anzahl von radial sich erstreckenden Axialzähnen 39 auf. Der Zapfen 37 ist in der Bohrung 20 der ersten Welle 16 aufgenommen, wobei die Zähne 39 mit den jeweiligen Nuten 38 fluchten. Wie es am deutlichsten in der Figur 5 zu erkennen ist, weisen die Nuten 38 im wesentlichen eine größere Breite auf als die Zähne 39. Infolgedessen ergibt sich ein Bereich einer Relativdrehbewegung oder die Möglichkeit einer "freien Bewegung" zwischen der zweiten Kreuzgelenkgabel 6 und der ersten Welle 16. Der Bereich der "freien Bewegung" wird durch den Winkel A dargestellt.

Wiederum sind die zweite Kreuzgelenkgabel 6 und die erste Welle 16 so miteinander befestigt, dass sie keine Axialbewegung relativ zueinander ausführen können. Dementsprechend ist ein Ring 40 in der Nut 41 des Zapfens 37 und in einer Nut 42 der ersten Welle 16 angeordnet. Der Ring 40 befindet sich in den Nuten 41, 42, um den Zapfen 27 und die erste Welle 16 ausreichend miteinander zu verbinden, wobei eine Trennung des Zapfens 27 von der ersten Welle nur durch das Aufbringen einer hohen Axiallast erzielt werden kann, nachdem der maximale Teleskopierbereich der Teleskopwellenanordnung 3 erreicht ist.

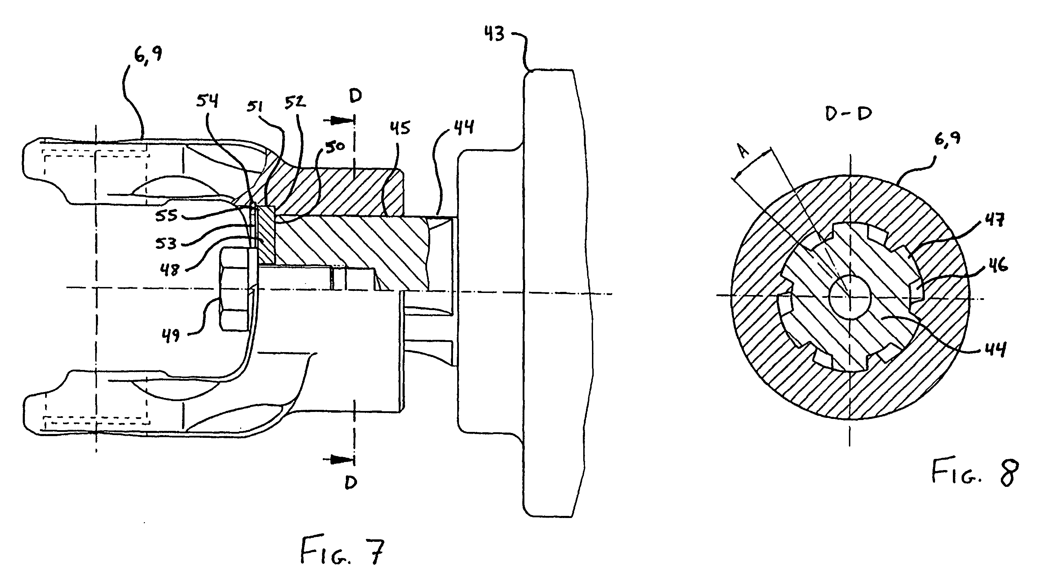

Gemäß den Figuren 7 und 8 ist die eine "freie Bewegung" zulassende Verbindung zwischen dem ersten oder zweiten Kreuzgelenk 2, 4 und dem antreibenden oder angetriebenen Teil vorgesehen. Genauer gesagt ist die in Figur 7 dargestellte Kreuzgelenkgabel entweder die zweite Kreuzgelenkgabel 6 des ersten Kreuzgelenks 2 oder die vierte Kreuzgelenkgabel 9 des zweiten Kreuzgelenks 4. Die Figur zeigt weiterhin einen Zapfen 44, der sich von einem Bauteil 43 aus erstreckt und mit diesem antriebsmäßig verbunden ist, wobei es sich bei diesem Bauteil 43 entweder um das antreibende Teil oder das angetriebene Teil handelt. Die Kreuzgelenkgabel 6, 9 weist eine Bohrung 45 mit einer Anzahl von axial verlaufenden Nuten 46 auf, und der Zapfen 44 weist eine Anzahl von radial sich erstreckenden Axialzähnen 47 auf. Der Zapfen 44 ist in der Bohrung 45 der Kreuzgelenkgabel 6, 9 aufgenommen, wobei die Zähne 47 jeweils mit den Nuten 46 fluchten. Wie in der Figur 8 am deutlichsten zu erkennen ist, weisen die Rillen 46 im wesentlichen eine größere Breite auf als die Zähne 47. Infolgedessen ergibt sich ein Bereich einer Relativdrehbewegung oder die Möglichkeit einer "freien Bewegung" zwischen den Kreuzgelenkgabeln 6, 9 und dem Zapfen 44. Der Bereich der "freien Bewegung" wird durch den Winkel A dargestellt.

Ähnlich wie oben beschrieben, sind die Kreuzgelenkgabel 6, 9 und der Zapfen 44 so miteinander verbunden, dass sie keine Axialbewegung relativ zueinander ausführen können. Dementsprechend sind eine Scheibe 48 und eine Schraube 49 vorgesehen, wobei die Scheibe 48 mit einer Endfläche 50 des Zapfens 44 mittels einer Schraube 49 verschraubt ist. Die Scheibe 48 weist einen größeren Durchmesser als der Zapfen 44 auf und ist in einer Ausnehmung 51 der Bohrung 45 der Kreuzgelenkgabel 6, 9 gegen eine erste Anschlagfläche 52 angeordnet. Ein Anschlagring 53 ist in einer Nut 54 der Bohrung 45 vorgesehen und bildet eine zweite Anschlagfläche 55. Die Unterlegscheibe 48 ist so befestigt, dass sie keine Axialbewegung zwischen der ersten und zweiten Anschlagfläche 52, 55 ausführen kann und verhindert so auch eine Axialbewegung der Gabel 6, 8 gegenüber dem Zapfen 44.

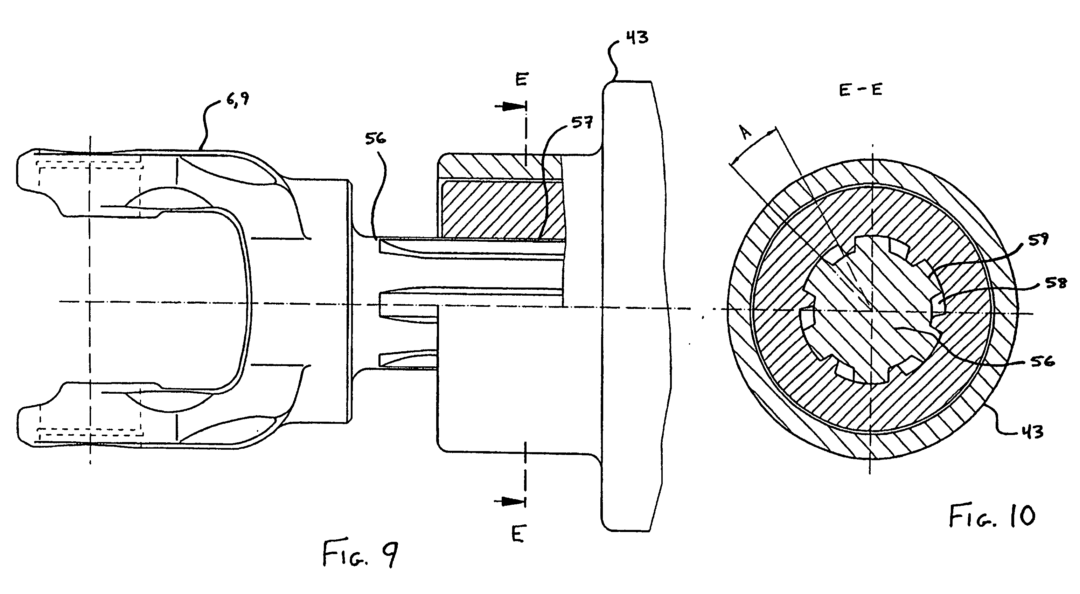

Eine Alternativausführungsform einer eine "freie Bewegung" zulassenden Verbindung zwischen einem ersten oder zweiten Kreuzgelenk 2, 4 und einem antreibenden oder angetriebenen Teil ist in den Figuren 9 und 10 dargestellt. Die Kreuzgelenkgabel 6, 9 weist einen Zapfen 56 auf, der sich von dem Bauteil 43 aus erstreckt und mit diesem antriebsmäßig verbunden ist. Das Bauteil 43 weist eine Bohrung 57 mit einer Anzahl von axial verlaufenden Nuten 58 auf, und der Zapfen 56 weist eine Anzahl von radial sich erstreckenden Axialzähnen 59 auf. Der Zapfen 56 ist in der Bohrung 57 aufgenommen, wobei die Zähne 59 jeweils mit den Nuten 58 fluchten. Wie am deutlichsten in der Figur 10 zu erkennen ist, ist die Breite der Nuten 58 im wesentlichen größer als die der Zähne 59. Infolgedessen ergibt sich ein Bereich einer Relativdrehbewegung oder die Möglichkeit einer "freien Bewegung" zwischen dem Zapfen 56 und dem Bauteil 43. Der Bereich der "freien Bewegung" wird durch den Winkel A dargestellt.

Es sei außerdem bemerkt, dass der erfindungsgemäße Mechanismus der "freien Bewegung" auch eine unterschiedliche Anzahl von Zahn- und Nutenkombinationen aufweisen kann. In den Figuren sind beispielsweise sechs Zähne und Nuten gezeigt. Diese Zahl ist variabel, je nach Konstruktion.

### Bezugszeichenliste

- 1: Gelenkwellenanordnung
- 2: erste Kreuzgelenkanordnung
- 3: Teleskopwellenanordnung
- 4: zweite Kreuzgelenkanordnung
- 5: erste Kreuzgelenkgabel
- 6: zweite Kreuzgelenkgabel
- 7: erstes Gelenkkreuz
- 8: dritte Kreuzgelenkgabel
- 9: vierte Kreuzgelenkgabel
- 10: zweites Gelenkkreuz
- 11: Schutzabdeckung
- 12: erstes Rohr
- 13: zweites Rohr
- 14: erste flexible Abdeckung
- 15: zweite flexible Abdeckung
- 16: erste Welle
- 16': Rippe
- 17: zweite Welle
- 17': Rippe
- 20: Bohrung
- 23: Bohrung
- 24: Zapfen
- 25: Schweißnaht
- 26: erstes Ende
- 27: zweites Ende
- 28: Bohrung
- 29: Nut
- 30: Axialzähne
- 31: erster Ring
- 32: Ende
- 33: zweiter Ring
- 34: Nut
- 35: Fläche
- 36: Scheibe
- 37: Zapfen
- 38: Nut
- 39: Axialzähne
- 40: Ring
- 41: Nut
- 42: Nut
- 43: Bauteil
- 44: Zapfen
- 45: Bohrung
- 46: Nut
- 47: Axialzähne
- 48: Scheibe
- 49: Schraube
- 50: Endfläche
- 51: Ausnehmung
- 52: erste Anschlagfläche
- 53: Anschlagring
- 54: Nut
- 55: zweite Anschlagfläche
- 56: Zapfen
- 57: Bohrung
- 58: Nut
- 59: Axialzähne

## Patentansprüche

1. Gelenkwellenanordnung zur Verbindung eines antreibenden Teils mit einem angetriebenen Teil,
- mit einer teleskopischen Wellenanordnung (3), die
- eine erste Welle (16) und
- eine zweite Welle (17) aufweist, welche mit der ersten Welle (16) entlang einer Längsachse (X) axial gleitend verschiebbar und drehfest für eine Drehmomentübertragung zwischen beiden verbunden ist,
- mit einem ersten Kreuzgelenk (2), das
- eine erste Kreuzgelenkgabel (5),
- eine zweite Kreuzgelenkgabel (6) und
- ein erstes Gelenkkreuz (7), durch das die erste Kreuzgelenkgabel (5) und die zweite Kreuzgelenkgabel (6) miteinander verbunden sind, umfasst,
- mit einem zweiten Kreuzgelenk (4), das
- eine dritte Kreuzgelenkgabel (8),
- eine vierte Kreuzgelenkgabel (9) und
- ein zweites Gelenkkreuz (10), durch das die dritte Kreuzgelenkgabel (8) und die vierte Kreuzgelenkgabel (9) miteinander verbunden sind, umfasst,
- mit Drehverstellmitteln, die
- auf einen vorgegebenen Drehwinkel (A) begrenzt, eine freie Relativdrehbewegung einer der Kreuzgelenkgabeln (5, 6; 8, 9) eines der Kreuzgelenke (2; 4) einerseits zu einem der beiden Wellenteile (16) oder einem Bauteil (44), der zu einem angetriebenen oder treibenden Teil (43) gehört, andererseits, zulassen,
**dadurch gekennzeichnet,**
**dass** die Drehverstellmittel eine Verzahnung mit axial verlaufenden Zähnen (30, 39, 47, 59) und Nuten (29, 38, 46, 58) als Elemente umfassen, von denen eines Bestandteil einer Kreuzgelenkgabel (6, 9) und eines Bestandteil eines Wellenteils (16) oder des Bauteils (44) ist und
**dass** die Kreuzgelenkgabel (6) zu dem Wellenteil (16) oder dem Bauteil (44) axial unbeweglich befestigt ist.

2. Gelenkwellenanordnung nach Anspruch 1,
**dadurch gekennzeichnet,**
**dass** die Kreuzgelenkgabel (6) axiale Nuten (29) aufweist und die erste Welle (16) mit einem Endabschnitt (27) mit radial sich erstreckenden Zähnen (30) versehen ist, die zum Eingriff in die Nuten (29) bestimmt sind und einen vorbestimmten Relativdrehbereich zu diesen ermöglichen.

3. Gelenkwellenanordnung nach Anspruch 2,
**dadurch gekennzeichnet,**
**dass** die axialen Nuten (29) in einer Bohrung (28) der Kreuzgelenkgabel (6) ausgeführt sind und dass die Zähne (30) sich von dem genannten Endabschnitt (27) aus nach außen erstrecken, wobei der Endabschnitt (27) in der Bohrung (28) aufgenommen ist, so dass ein Eingriff zwischen den Zähnen (30) und den axialen Nuten (29) gegeben ist.

4. Gelenkwellenanordnung nach Anspruch 2,
**dadurch gekennzeichnet,**
**dass** die axialen Nuten in einer Außenumfangsfläche der Kreuzgelenkgabel (6) ausgebildet sind und sich die Zähne von dem Endabschnitt aus radial nach innen erstrecken, wobei die Kreuzgelenkgabel (6) in dem Endabschnitt teilweise aufgenommen ist, so dass ein Eingriff zwischen den Zähnen und den axialen Nuten gegeben ist.

5. Gelenkwellenanordnung nach Anspruch 2,
**dadurch gekennzeichnet,**
**dass** sie einen Ring (33, 40) aufweist, der in eine ringförmige Nut (40, 41) in der Kreuzgelenkgabel (6) oder der ersten Welle (16) eingreift, so dass die Kreuzgelenkgabel (6) und die erste Welle (16) so festgesetzt sind, dass eine relative Axialbewegung zwischen beiden verhindert ist.

6. Gelenkwellenanordnung nach Anspruch 1,
**dadurch gekennzeichnet,**
**dass** die Kreuzgelenkgabel (6) axiale Nuten (46) aufweist und dass entweder das antreibende Teil oder das angetriebene Teil mit radial sich erstreckenden Axialzähnen (47) versehen ist, die in die axialen Nuten (46) eingreifen und den vorbestimmten Relativdrehbereich ermöglichen.

7. Gelenkwellenanordnung nach Anspruch 6,
**dadurch gekennzeichnet,**
**dass** die axialen Nuten (46) in einer Bohrung (45) der Kreuzgelenkgabel (6) ausgebildet sind und die Zähne (47) sich von dem angetriebenen oder antreibenden Teil aus radial nach außen erstrecken, wobei das angetriebene oder antreibende Teil in der Bohrung (45) aufgenommen ist, so dass ein Eingriff zwischen den Zähnen (47) und den axialen Nuten (46) gegeben ist.

8. Gelenkwellenanordnung nach Anspruch 6,
**dadurch gekennzeichnet,**
**dass** die axialen Nuten entlang einem Zapfen (37) der Kreuzgelenkgabel (6) ausgebildet sind und die Zähne sich innerhalb einer Bohrung des antreibenden oder angetriebenen Teils radial nach innen erstrecken, wobei der Zapfen (37) teilweise in der Bohrung aufgenommen ist, so dass ein Eingriff zwischen den Zähnen und den axialen Nuten gegeben ist.

9. Gelenkwellenanordnung nach Anspruch 6,
**dadurch gekennzeichnet,**
**dass** sie weiterhin einen Ring (48) aufweist, der in eine Nut (51) der Kreuzgelenkgabel (6) des angetriebenen Teils oder des antreibenden Teils eingreift, so dass die Kreuzgelenkgabel (6) zu dem angetriebenen Teil oder dem antreibende Teil so festgesetzt ist, dass eine relative Axialbewegung zwischen beiden verhindert ist.

10. Gelenkwellenanordnung nach Anspruch 1,
**dadurch gekennzeichnet,**
**dass** die erste Welle (16) einen mit ihr verbundenen Zapfen (24) aufweist, der eine antriebsmäßige Verbindung zwischen der Kreuzgelenkgabel (6) und der ersten Welle (16) herstellt.

## Claims

1. A driveshaft assembly for connecting a driving part to a driven part,
- having a telescopic shaft assembly (3) which comprises
- a first shaft (16) and
- a second shaft (17) which is coupled to the first shaft (16) so as to be axially slidably displaceable along a longitudinal axis (X) for transmitting torque between said two shafts,
- having a first universal joint (2) which comprises
- a first universal joint yoke (5),
- a second universal joint yoke (6) and
- a first joint cross (7) which connects the first universal joint yoke (5) and the second universal joint yoke (6) to one another,
- having a second universal joint (4) which comprises
- a third universal joint yoke (8) and
- a fourth universal joint yoke (9) and
- a second joint cross (10) which connects the third universal joint yoke (8) and the fourth universal joint yoke (9) to one another,
- having rotational adjusting means which
- while limited to a predetermined angle of rotation (A) permit a free relative rotational movement of one of the universal joint yokes (5, 6; 8, 9) of one of the universal joints (2, 4) relative to one of the two shaft parts (16) on the one hand or relative to a component (44) associated with a driven or driving part (43) on the other hand,
that the rotational adjusting means comprise toothed means with axially extending teeth (30, 39, 47, 59) and grooves (29, 38, 46, 58) as elements of which one forms part of a universal joint yoke (6, 9) and one forms part of a shaft part (16) or the component (44), and
that the universal joint yoke (6) is axially immovably fixed to the shaft part (16) or to the component (44).

2. A driveshaft assembly according to claim 1,
**characterised in**
**that** the universal joint yoke (6) comprises axial grooves (29) and that the first shaft (16) is provided with an end portion (27) with radially extending teeth (30) which are provided to engage the grooves (29) and permit a predetermined range of relative rotation relative thereto.

3. A driveshaft assembly according to claim 2,
**characterised in**
**that** the axial grooves (29) are provided in a bore (28) of the universal joint yoke (6) and that the teeth (30) extend outwardly from said end portion (27), wherein the end portion (27) is received in the bore (28), so that engagement takes place between the teeth (30) and the axial grooves (29).

4. A driveshaft assembly according to claim 2,
**characterised in**
**that** the axial grooves are formed in an outer circum-ferential face of the universal joint yoke (6) and that the teeth extend from the end portion radially inwardly, wherein the universal joint yoke (6) is partially received in the end portion, so that an engagement takes place between the teeth and the axial grooves.

5. A driveshaft assembly according to claim 2,
**characterised in**
**that** it comprises a ring (33, 40) which engages an annular groove (40, 41) in the universal joint yoke (6) or in the first shaft (16), so that the universal joint yoke (6) and the first shaft (16) are fixed in such a way that a relative axial movement between same is prevented.

6. A driveshaft assembly according to claim 1,
**characterised in**
**that** the universal joint yoke (6) comprises axial grooves (46) and that either the driving part or the driven part is provided with radially extending axial teeth (47) which engage the axial grooves (46) and permit the predetermined range of relative rotation.

7. A driveshaft assembly according to claim 6,
**characterised in**
**that** the axial grooves (46) are provided in a bore (45) of the universal joint yoke (6) and that the teeth (47) extend radially outwardly from the driven or driving part, wherein the driven or driving part is received in the bore (45), so that engagement takes place between the teeth (47) and the axial grooves (46).

8. A driveshaft assembly according to claim 6,
**characterised in**
**that** the axial grooves are provided along a journal (37) of the universal joint yoke (6) and that the teeth extend radially inwardly inside the bore of the driving or driven part, wherein the journal (37) is partially received in the bore, so that engagement takes place between the teeth and the axial grooves.

9. A driveshaft assembly according to claim 6,
**characterised in**
**that**, furthermore, it comprises a ring (48) which engages a groove (51) of the universal joint yoke (6) of the driven or driving part, so that the universal joint yoke (6) is fixed relative to the driven or driving part in such a way that a relative axial movement between the two is prevented.

10. A driveshaft assembly according to claim 1,
**characterised in**
**that** the first shaft (16) comprises a journal (24) which is connected to same and which, drivewise, establishes a connection between the universal joint yoke (6) and the first shaft (16).

## Revendications

1. Agencement d'arbre articulé pour la liaison d'une pièce menante avec une pièce menée, comprenant
- un agencement d'arbre télescopique (3) qui comprend
- un premier arbre (16) et
- un second arbre (17) qui est relié au premier arbre (16) avec faculté de translation par coulissement axial le long d'un axe longitudinal (X) et solidairement en rotation pour la transmission d'un couple de rotation entre les deux arbres,
- un premier joint à croisillon (2) qui comprend
- une première fourche de joint (5),
- une seconde fourche de joint (6), et
- un premier croisillon (7) au moyen duquel la première fourche de joint (5) et la seconde fourche de joint (6) sont reliées l'une à l'autre,
- un second joint à croisillon (4) qui comprend
- une troisième fourche de joint (8),
- une quatrième fourche de joint (9), et
- un second croisillon (10) au moyen duquel la troisième fourche de joint (8) et la quatrième fourche de joint (9) sont reliées l'une à l'autre,
- des moyens de réglage en rotation, qui permettent un mouvement de rotation relative libre de l'une des fourches de joint (5, 6 ; 8, 9) de l'un des joints à croisillon (2 ; 4) d'une part par rapport à l'une des deux parties d'arbre (16) ou par rapport à un composant (44) qui appartient à une pièce (43) menante ou menée, d'autre part, avec limitation à un angle de rotation prédéterminé (A),
**caractérisé en ce que** :
les moyens de réglage en rotation comprennent une denture avec comme éléments des dents s'étendant axialement (30, 39, 49, 59) et des gorges (29, 38, 46, 58), l'un de ces éléments étant un composant d'une fourche de joint (6, 9) et l'un de ces éléments étant un composant d'une partie d'arbre (16) ou du composant (44), et
**en ce que** la fourche de joint (6) est fixée sans faculté de déplacement axial sur la partie d'arbre (16) ou sur le composant (44).

2. Agencement d'arbre articulé selon la revendication 1, **caractérisé en ce que** la fourche de joint (6) comporte des gorges axiales (29), et le premier arbre (16) est pourvu d'un tronçon terminal (27) avec des dents (30) s'étendant radialement, lesquelles sont destinées à s'engager dans les gorges (29) et permettent une plage de rotation relative prédéterminée par rapport à celles-ci.

3. Agencement d'arbre articulé selon la revendication 2, **caractérisé en ce que** les gorges axiales (29) sont ménagées dans un perçage (28) de la fourche de joint (6), et **en ce que** les dents (30) s'étendent vers l'extérieur depuis le tronçon terminal (27) précité, ledit tronçon terminal (27) étant reçu dans le perçage (28) de manière à assurer un engagement entre les dents (30) et les gorges axiales (29).

4. Agencement d'arbre articulé selon la revendication 2, **caractérisé en ce que** les gorges axiales sont ménagées dans une surface périphérique extérieure de la fourche de joint (6), et les dents s'étendent radialement vers l'intérieur depuis le tronçon terminal, et **en ce que** la fourche de joint (6) est partiellement logée dans le tronçon terminal de sorte manière à assurer un engagement entre les dents et les gorges axiales.

5. Agencement d'arbre articulé selon la revendication 2, **caractérisé en ce qu'**il comprend une bague (33, 40) qui s'engage dans une gorge annulaire (40, 41) dans la fourche de joint (6) ou dans le premier arbre (16), de sorte que la fourche de joint (6) et le premier arbre (16) sont immobilisés de manière à empêcher un mouvement axial relatif entre les deux.

6. Agencement d'arbre articulé selon la revendication 1, **caractérisé en ce que** la fourche de joint (6) comporte des gorges axiales (46) et **en ce que** soit la partie menante soit la partie menée est pourvue de dents axiales (47) qui s'étendent radialement et s'engagent dans les gorges axiales (46) en permettant la plage de rotation relative prédéterminée.

7. Agencement d'arbre articulé selon la revendication 6, **caractérisé en ce que** les gorges axiales (46) sont ménagées dans un perçage (45) de la fourche de joint (6), et les dents (47) s'étendent radialement vers l'extérieur depuis la pièce menante ou la pièce menée, ladite pièce menante ou menée étant reçue dans le perçage (45) de manière à assurer un engagement entre les dents (47) et les gorges axiales (46).

8. Agencement d'arbre articulé selon la revendication 6, **caractérisé en ce que** les gorges axiales sont ménagées le long d'un tenon (37) de la fourche de joint (6), et les dents s'étendent radialement vers l'intérieur à l'intérieur d'un perçage de la pièce menante ou de la pièce menée, ledit tenon (37) étant reçu partiellement dans le perçage de manière à assurer un engagement entre les dents et les gorges axiales.

9. Agencement d'arbre articulé selon la revendication 6, **caractérisé en ce qu'**il comprend en outre une bague (48) qui s'engage dans une gorge (51) de la fourche de joint (6) de la partie menante ou de la partie menée, de sorte que la fourche de joint (6) est immobilisée par rapport à la partie menante ou à la partie menée de manière à empêcher un mouvement axial relatif entre les deux.

10. Agencement d'arbre articulé selon la revendication 1, **caractérisé en ce que** le premier arbre (16) comprend un tenon (24) relié à lui-même, qui établit une liaison d'entraînement entre la fourche de joint (6) et le premier arbre (16).
